# EUROPÄISCHE PATENTSCHRIFT

(11) **EP 3 517 685 B1**
(45) Veröffentlichungstag und Bekanntmachung des Hinweises auf die Patenterteilung: **29.07.2020**
(21) Anmeldenummer: 18153709.3
(22) Anmeldetag: 26.01.2018
(51) Int. Cl.: E01H 1/08, A01D 34/04, A47L 9/00, A47L 11/40

(54) **ANBAUTEIL FÜR EINE BODENREINIGUNGSMASCHINE**
ATTACHMENT ELEMENT FOR A FLOOR CLEANING MACHINE
PIÈCE RAPPORTÉE POUR UNE MACHINE DE NETTOYAGE DU SOL

(43) Veröffentlichungstag der Anmeldung: 31.07.2019
(73) Patentinhaber: Hako GmbH, 23843 Bad Oldesloe (DE)
(72) Erfinder: PROTZ, Carsten, 23730 Altenkrempe (DE); ENGLER, Moritz, 23552 Lübeck (DE)
(74) Vertreter: Bird & Bird LLP

(56) Entgegenhaltungen:
- EP-A2- 2 733 262
- FR-A1- 2 229 374

## Beschreibung

Die vorliegende Erfindung betrifft ein Anbauteil zum Anbringen an eine Bodenreinigungsmaschine.

Anbauteile für Bodenreinigungsmaschinen, die an deren Maschinenrahmen beispielsweise an dem Vorderende oder dem Hinterende angebracht werden können, sind hinlänglich aus dem Stand der Technik bekannt. So können beispielsweise Kehraggregate, Schrubbaggregate oder auch einfach Aufnahmeplattformen für weitere Geräte, die zum Reinigen einer Bodenfläche eingesetzt werden können, wie Staubsauger oder dgl., an dem Maschinenrahmen gehaltert werden. Derartige Anbauteile müssen jedoch häufig während des Reinigungsbetriebs von der Bodenreinigungsmaschine demontiert werden, um diese für einen Einsatz in eng begrenzten Räumen besser manövrierfähig zu machen.

Darüber hinaus ist es bei gewissen Typen von Anbauteilen erforderlich, diese zwischen einer abgesenkten Betriebsstellung, in der beispielsweise Borsten am Anbauteil mit einer zu reinigenden Bodenfläche eingreifen, und einer ausgehobenen Stellung zu bewegen, in der die Borsten außer Eingriff mit der Bodenfläche sind, um die Maschine schneller und ohne Verschleiß an den Borsten bewegen zu können. Daher ist es neben einem einfachen Koppelmechanismus für das Anbauteil häufig erforderlich, dass zusätzlich ein Hebemechanismus vorgesehen ist, mit dem die vertikale Position des Anbauteils verändert werden kann.

Schließlich ist es wünschenswert, dass der Koppelmechanismus und der Hebemechanismus einfach zu bedienen und einfach ausgestaltet sind.

Beispielsweise zeigen EP 2 733 262 A2 und FR 2 229 374 A1 Anbauteile für Fahrzeuge.

Daher ist die Aufgabe der vorliegenden Erfindung, ein Anbauteil sowie ein System aus einer Bodenreinigungsmaschine und einem Anbauteil bereit zu stellen, die einfach ausgestaltet sind und erlauben, das Anbauteil an den Maschinenrahmen der Bodenreinigungsmaschine zu koppeln und vertikal gegenüber diesem zu verstellen.

Diese Aufgabe wird durch ein Anbauteil zum Anbringen an einer Bodenreinigungsmaschine gemäß Anspruch 1 sowie durch ein System aus einer Bodenreinigungsmaschine und einem Anbauteil gemäß Anspruch 11 gelöst. Vorteilhafte Ausgestaltungen sind Gegenstand der abhängigen Ansprüche.

Erfindungsgemäß weist das Anbauteil einen Basisrahmen auf, der ein Vorderende und ein Kopplungsende umfasst, wobei das Kopplungsende im montierten Zustand an einer Bodenreinigungsmaschine zu dieser hinweist, während das Vorderende davon weg weist. Darüber hinaus ist an dem Basisrahmen ein Abstützelement vorgesehen, das ausgestaltet ist, das Anbauteil gegenüber einer Bodenfläche abzustützen und beabstandet davon zu halten. Insbesondere soll das Abstützelement ausgestaltet sein, das Anbauteil in einer Höhe gegenüber der Bodenfläche zu halten, die es einer Bodenreinigungsmaschine erlaubt, so an das Anbauteil heran bewegt zu werden, dass durch eine einfache vertikale Bewegung ein erstes Kopplungselement an dem Anbauteil in Eingriff mit einem zweiten Kopplungselement an dem Maschinenrahmen der Bodenreinigungsmaschine gebracht werden kann. Demnach weist das erfindungsgemäße Anbauteil ein erstes Kopplungselement auf, das durch eine einfache vertikale Bewegung in Eingriff mit einem zweiten Kopplungselement an der Bodenreinigungsmaschine gebracht werden kann. Dieses erste Kopplungselement kann beispielsweise als ein Hakenelement ausgestaltet sein, das mit einer entsprechenden Öse oder Ringelement an dem Maschinenrahmen in Eingriff gebracht werden kann. Es sind aber auch andere Ausgestaltungen denkbar.

Ferner schlägt die vorliegende Erfindung vor, dass das Anbauteil ein Druckelement aufweist, das verschwenkbar an dem Basisrahmen angebracht ist und das mit einem freien Ende, das entfernt von der Schwenkachse des Druckelements angeordnet ist, mit einer Anlagefläche an dem Maschinenrahmen der Bodenreinigungsfläche in Anlage kommen kann. Die Anlagefläche verläuft dabei bevorzugt vertikal, kann aber auch anders orientiert sein. Schließlich ist an dem erfindungsgemäßen Anbauteil ein Betätigungselement vorgesehen, das um eine im normalen Betriebszustand des Anbauteils horizontal verlaufende Achse relativ zu dem Basisrahmen verschwenkt werden kann, wobei das Betätigungselement mit einer Betätigungswelle gekoppelt ist, die um eine horizontale Schwenkachse schwenkbar an dem Basisrahmen gehaltert ist.

Des Weiteren ist das erste Kopplungselement derart angeordnet, dass es zusammen mit der horizontalen Schwenkachse der Betätigungswelle eine Querebene festlegt, die so verläuft, dass einerseits die Schwenkachse darin verläuft und andererseits das erste Kopplungselement ebenfalls darin angeordnet ist. Außerdem verläuft die Querebene quer zur Fahrtrichtung der Bodenreiniungsmaschine und von der Bodenfläche nach oben durch das erste Kopplungselement. Insbesondere kann die Querebene derart verlaufen, dass dann, wenn das Anbauteil im normalen Betrieb auf einer Bodenfläche angeordnet ist, die Querebene senkrecht zu der Bodenfläche und durch das erste Kopplungselement verläuft.

Erfindungsgemäß ist das Abstützelement mit der Betätigungswelle gekoppelt, sodass beim Verschwenken der Betätigungswelle zwischen einer ausgefahrenen und wenigstens einer eingefahrenen Stellung verschwenkt wird, wobei das freie Ende des Abstützelements in der ausgefahrenen Stellung einen größeren Abstand von dem Basisrahmen hat als dies in der wenigstens einen eingefahrenen Stellung der Fall ist. Damit wird ermöglicht, das Abstützelement wieder an den Basisrahmen heran zu bewegen, so dass dann, wenn das Anbauteil am Maschinenrahmen der Bodenreinigungsmaschine gehaltert ist, das Anbauteil bzw. das Abstützelement von der Bodenfläche frei kommt.

Darüber hinaus ist das Druckelement ebenfalls mit der Betätigungswelle gekoppelt, sodass es beim Verschwenken der Betätigungswelle zwischen einer Freigabestellung, einer Koppelstellung und einer Aushebestellung verschwenkt wird, wobei die Position des freien Endes des Druckelements in der Freigabestellung gesehen entlang einer Verstellrichtung, die senkrecht zur Querebene verläuft dem Vorderende des Basisrahmens näher ist als die Position des freien Endes in der Aushebestellung. Dies bedeutet, dass das freie Ende des Druckelements in der Freigabestellung gegenüber dem Kopplungsende weiter ins Innere des Basisrahmens zurückgezogen ist, als dies in der Aushebestellung der Fall ist. Darüber hinaus ist die Position des freien Endes des Druckelements in der Koppelstellung zwischen der Position in der Freigabestellung und der in der Aushebestellung angeordnet.

Schließlich sind das Abstützelement und das Druckelement derart an die Betätigungswelle gekoppelt, dass dann, wenn das Abstützelement in der ausgefahrenen Stellung ist, das Druckelement in der Freigabestellung ist. Darüber hinaus befindet sich das Abstützelement in wenigstens einer der eingefahrenen Stellungen, wenn das Druckelement in der ausgehobenen Stellung oder der Koppelstellung ist.

Insbesondere durch die Kopplung, wie sie zuvor beschrieben worden ist, wird erreicht, dass dann, wenn das Betätigungselement, beispielsweise in Form eines Betätigungshebels, derart betätigt wird, dass das Abstützelement aus der ausgefahrenen in die eingefahrene Stellung bewegt wird, was mit einer vertikalen Bewegung des Anbauteils relativ zu der Bodenreinigungsmaschine verbunden ist, zunächst das erste Kopplungselement in Eingriff mit dem zweiten Kopplungselement am Maschinenrahmen der Bodenreinigungsmaschine gelangt. Dadurch wird bei dieser Bewegung des Betätigungselements beziehungsweise der Betätigungswelle zunächst erreicht, dass das Anbauteil mit dem Maschinenrahmen verriegelt wird. Verbunden mit dieser Bewegung ist erfindungsgemäß außerdem, dass das Druckelement entlang der Verstellrichtung hin zu der Anlagefläche bewegt wird, die an dem Maschinenrahmen der Bodenreingungsmaschine vorgesehen ist und vertikal ausgerichtet ist. Dadurch stützt sich das Druckelement am Maschinenrahmen ab und wird in einer vorgegebenen Winkelstellung, die durch die Position des freien Ende des Druckelements festgelegt ist, relativ zu dem Maschinenrahmen gehalten, ohne dass das Anbauteil weiter durch das Abstützelement an der Bodenfläche abgestützt werden muss.

Nun kann das Anbauteil aus der Koppelstellung weiter dadurch angehoben werden, dass das Betätigungselement so bewegt wird, dass sich das Druckelement in die Aushebestellung bewegt.

Insgesamt wird also erreicht, dass allein durch ein Betätigen des Betätigungselements einerseits ein Ankoppeln oder Verriegeln des Anbauteils am Maschinenrahmen erfolgt und anderseits auch noch bewirkt werden kann, dass sich die vertikale Position des Anbauteils relativ zu dem Maschinenrahmen verändert.

Um einen einfachen Aufbau zu realisieren, ist es bevorzugt, wenn sich die Betätigungswelle entlang der Schwenkachse erstreckt. Es ist aber nicht zwingend notwendig dass die Betätigungswelle, an der das Druckelement und das Abstützelement angekoppelt sind, mit der Schwenkachse davon zusammen fällt.

Des Weiteren ist in einer bevorzugten Ausführungsform das Abstützelement unmittelbar an der Betätigungswelle befestigt und schwenkt somit um die Schwenkachse. In diesem Fall sind keine komplizierten Aufbauten erforderlich, das Abstützelement mit der Betätigungswelle zu koppeln, sodass ein Verschwenken der Betätigungswelle dann eine Schwenkbewegung des Abstützelements bewirkt.

In analoger Weise können sowohl das Druckelement als auch das Betätigungselement oder nur eines davon unmittelbar an der Betätigungswelle befestigt sein. Dadurch wird jeweils ein besonders einfacher Aufbau realisiert.

In einer weiteren bevorzugten Ausführungsform kann an dem freien Ende des Abstützelements ein Laufrad vorgesehen werden, was es ermöglicht, das Anbauteil, wenn das Abstützelement in der ausgefahren Stellung ist, über eine Bodenfläche zu schieben.

Um zu verhindern, dass das Druckelement versehentlich über die Koppelstellung hinaus in die Freigabestellung bewegt wird, ist es bevorzugt, wenn eine Führung für den Betätigungshebel, der das Betätigungselement bildet, vorgesehen ist, die derart ausgestaltet ist, dass der Betätigungshebel, wenn er aus der mit der Koppelstellung korrespondierenden Stellung in die Freigabestellung verschwenkt wird, eine Bewegung parallel zur Schwenkachse und anschließend eine Schwenkbewegung um die Schwenkachse vollzieht.

Weiter bevorzugt kann das Anbauteil als Kehraggregrat ausgestaltet sein, wobei es ein Bürstenelement mit einem Zentralkörper aufweist, an dem sich davon wegerstreckende Borsten vorgesehen sind. Das Bürstenelement ist drehend angetrieben, und das Anbauteil ist derart ausgestaltet, dass die freien Enden der Borsten von einer zu reinigenden Bodenfläche beabstanded sind, wenn sich das Anbauteil in der Aushebestellung befindet, während sie in Eingriff mit Bodenfläche sind, wenn es sich in der Koppelstellung befindet. Hierbei kann die Drehachse des Bürstenelements entweder senkrecht oder parallel zur Schwenkachse verlaufen.

Schließlich wird die erfindungsgemäße Aufgabe durch ein System aus einer Bodenreinigungsmaschine und einem Anbauteil nach einer der zuvor beschriebenen Ausführungsformen gelöst, wobei an der Bodenreinigungsmaschine bzw. an deren Maschinenrahmen ein Fahrwerk zum Bewegen der Bodenreinigungsmaschine über eine zu reinigende Bodenfläche vorgesehen ist und der Maschinenrahmen weiter eine vertikal verlaufende Anlagefläche und ein in der vertikalen Richtung gesehen darüber liegendes zweites Kopplungselement aufweist, das angepasst ist, mit dem ersten Kopplungselement an dem Anbauteil eingreifen zu können, wenn das Anbauteil vertikal abgesenkt wird, wenn das Abstützelement aus der ausgefahrenen in die eingefahrene Stellung überführt wird.

Im Folgenden wird die vorliegende Erfindung anhand einer ein lediglich bevorzugtes Ausführungsbeispiel zeigenden Zeichnung beschrieben, wobei
- Fig. 1: eine Schnittansicht des Ausführungsbeispiels eines erfindungsgemäßen Anbauteils in einer Freigabestellung zeigt,
- Fig. 2: eine Schnittansicht des Ausführungsbeispiels aus Fig. 1 in der Koppelstellung zeigt,
- Fig. 3: eine Schnittansicht des Ausführungsbeispiels aus Fig. 1 in der Aushebestellung zeigt,
- Fig. 4: eine perspektivische Ansicht des Ausführungsbeispiels aus Fig. 1 in der Freigabestellung zeigt,
- Fig. 5: eine perspektivische Ansicht des Ausführungsbeispiels aus Fig. 1 in der Koppelstellung zeigt und
- Fig. 6: eine perspektivische Ansicht des Ausführungsbeispiels aus Fig. 1 in der Aushebestellung zeigt.

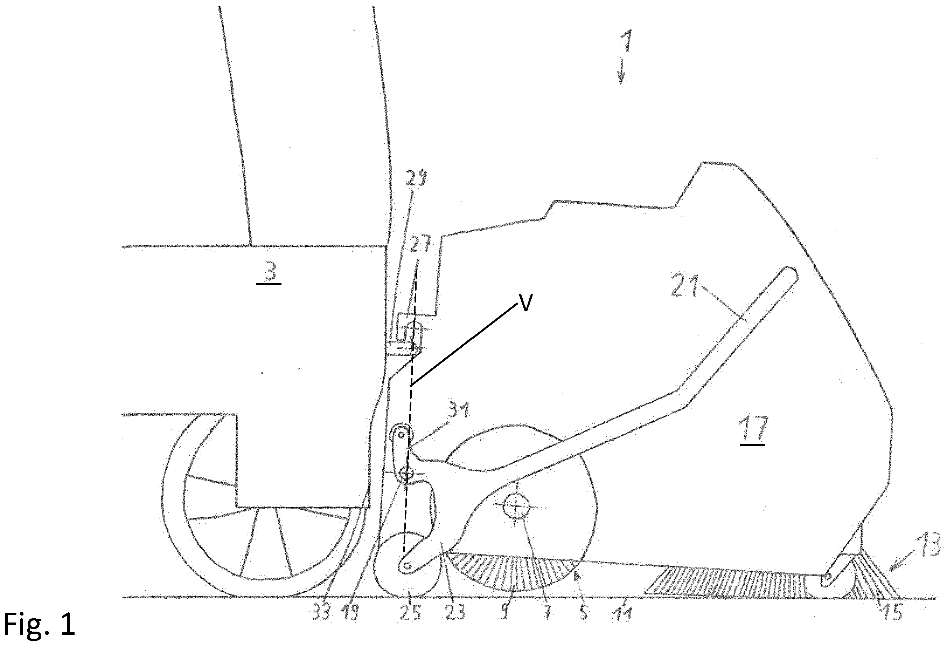

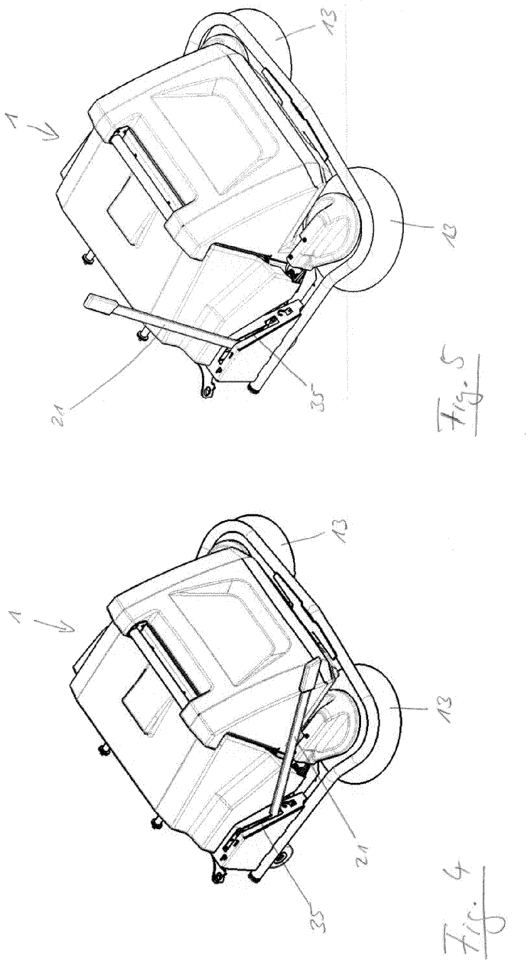

Wie aus den Fig. 1 und 4 zu erkennen ist, ist das im Folgenden beschriebene bevorzugte Ausführungsbeispiel eines Anbauteils 1 für eine Bodenreinigungsmaschine 3, die nur schematisch angedeutet ist, als Kehraggregat ausgebildet. Die Bodenreinigungsmaschine 3 weist dabei ein Fahrwerk zum Bewegen der Bodenreinigungsmaschine 3 über eine Bodenfläche auf.

Die vorliegende Erfindung ist aber nicht auf als Kehraggregate ausgebildete Anbauteile beschränkt, sondern kann auch bei Schrubbaggregaten, Mähaggregaten oder auch einfachen Aufnahmeplattformen für weitere Geräte, die zum Reinigen einer Bodenfläche eingesetzt werden können, wie Staubsauger oder dgl., Anwendung finden.

Wie insbesondere in den Schnittansichten in der Ebene des Betätigungshebels zu erkennen ist, weist das als Kehraggregat ausgebildete Ausführungsbeispiel eines erfindungsgemäßen Anbauteils 1 ein als Kehrwalze 5 ausgebildetes Bürstenelement mit einem Zentralkörper 7 und sich davon wegerstreckenden Borsten 9 auf, wobei in einer Koppelstellung die freien Enden der Borsten 9 mit der Bodenfläche 11 eingreifen, über die das Anbauteil 1 im Betrieb von der Bodenreinigungsmaschine 3 mittels des Fahrwerks bewegt wird. In einer Aushebestellung des Anbauteils 1 sind die freien Enden der Borsten 9 von der Bodenfläche 11 beabstandet. Außerdem weist das Anbauteil 1 zwei Seitenbesen 13 auf, die ebenfalls einen Zentralkörper und sich davon weg erstreckende Borsten 15 aufweisen, wobei auch hier die Borsten 15 dann in Eingriff mit der Bodenfläche 11 sind, wenn das Anbauteil 1 in der Koppelstellung ist, und von der Bodenfläche 11 beabstandet sind, wenn das Anbauteil 1 in der Aushebestellung ist. Im Betrieb rotiert die Kehrwalze 5 um eine horizontal verlaufende Drehachse, während der Seitenbesen 13 um eine vertikal verlaufende Drehachse rotierend angetrieben ist.

Sowohl die Kehrwalze 5 als auch die Seitenbesen 13 sind an einem Basisrahmen 17 des Anbauteils 1 gehaltert, an dem außerdem eine Betätigungswelle 19 vorgesehen ist, die sich in der normalen Betriebsstellung des Anbauteils 1 im Wesentlichen horizontal und quer zur Bewegungsrichtung der Bodenreinigungsmaschine 3 erstreckt. Außerdem ist die Betätigungswelle 19 um eine Schwenkachse schwenkbar an dem Basisrahmen 17 gehaltert, wobei sich die Schwenkachse in dem hier beschriebenen Ausführungsbeispiel entlang der Betätigungswelle 19 erstreckt. Es ist aber auch denkbar, dass die Betätigungswelle um eine Schwenkachse schwenkt, die parallel versetzt zu der Betätigungswelle verläuft.

Fest mit der Betätigungswelle 19 gekoppelt ist ein als Betätigungshebel 21 ausgebildetes Betätigungselement, der somit ebenfalls um die Schwenkachse schwenkt. Des Weiteren ist an der Betätigungswelle ein Abstützelement 23 fest angebracht, sodass dieses beim Verschwenken der Betätigungswelle 19 mit verschwenkt wird. Am freien Ende des Abstützelements 23 ist in dem hier beschriebenen Ausführungsbeispiel ein Laufrad 25 angebracht. Das Abstützelement 23 mit dem Laufrad 25 ist ausgebildet, das Anbauteil 1 in einem demontierten Zustand, in dem es von der Bodenreinigungsmaschine 3 gelöst ist, mit einem freien Ende auf der Bodenfläche 11 abzustützen,

Oberhalb der Betätigungswelle 19 ist an dem Basisrahmen 17 des Anbauteils 1 ein erstes Kopplungselement 27 vorgesehen, das mit einem zweiten, an der Bodenreinigungsmaschine 3 angebrachten Kopplungselement 29 eingreifen kann. Insbesondere sind das erste und das zweite Kopplungselement 27, 29 derart ausgestaltet, dass sie bei einer vertikalen Bewegung des Anbauteils 1 hin zu der Bodenfläche 11 relativ zu der Bodenreinigungsmaschine 3 so miteinander eingreifen können, dass das Anbauteil 1 gegen eine weitere vertikale Bewegung hin zu der Bodenfläche 11 und außerdem eine Bewegung parallel zur Bodenfläche 11 relativ zu Bodenreinigungsmaschine 3 verriegelt ist. In dem hier beschriebenen Ausführungsbeispiel ist das erste Kopplungselement 27 als ein Haken ausgestaltet, der in das als Öse ausgestaltete zweite Kopplungselement 29 an der Bodenreinigungsmaschine 3 eingreift. Es sind hier aber auch andere Ausgestaltungen denkbar, bei denen allerdings gewährleistet sein muss, dass die zuvor beschriebene Verriegelungsfunktion sowohl in vertikaler als auch horizontaler Richtung realisiert wird.

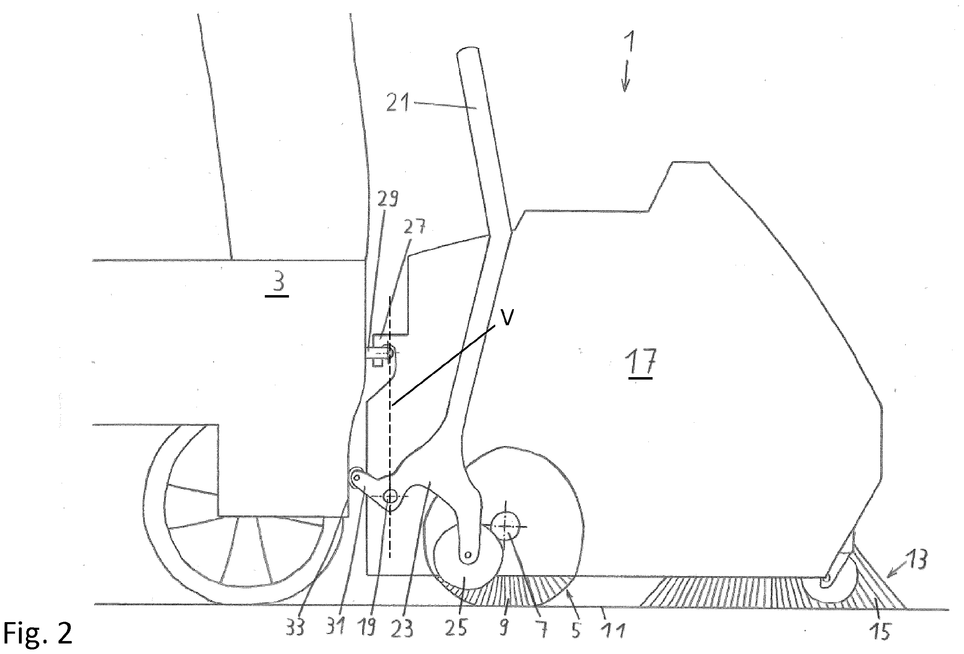

Weiterhin ist bei dem hier beschriebenen Ausführungsbeispiel des Anbauteils 1 an der Betätigungswelle 19 ein Druckelement 31 (siehe Fig. 2) fest angebracht, sodass es bei einer Schwenkbewegung der Betätigungswelle 19 mit verschwenkt wird. Das Druckelement 31 ist ausgestaltet und derart an dem Basisrahmen 17 angebracht, dass es mit seinem freien Ende mit einer hier vorzugsweise vertikal verlaufenden Anlagefläche 33 an der Bodenreinigungsmaschine 3 zur Anlage kommen kann.

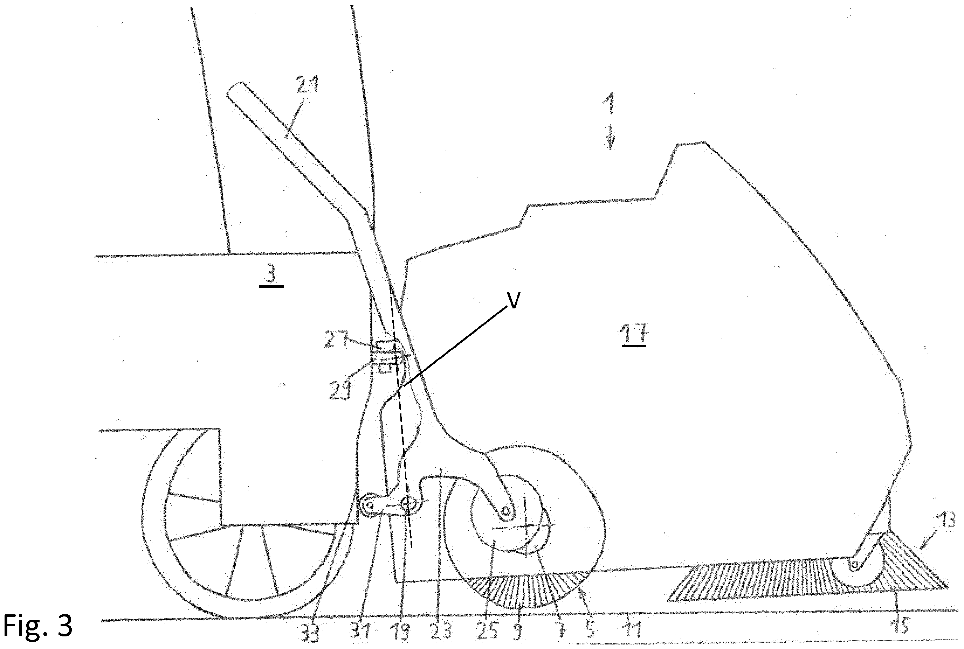

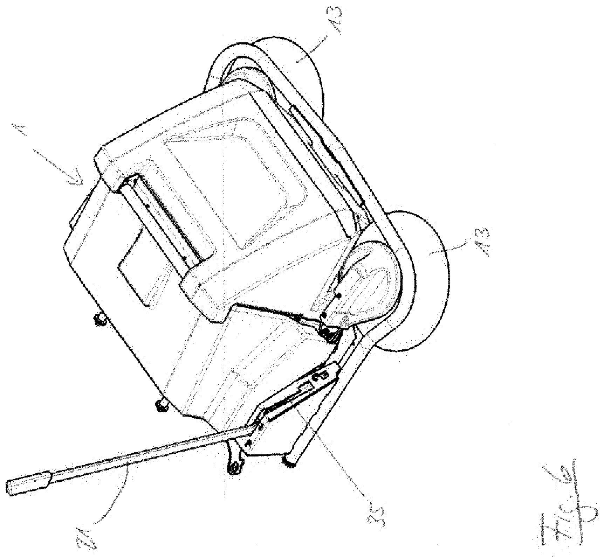

Wie weiterhin aus Fig. 4 bis 6 zu erkennen ist, ist an dem Anbauteil 1 eine Führung 35 für den Betätigungshebel 21 vorgesehen, entlang derer der Betätigungshebel 21 geführt ist. Dabei kann der Betätigungshebel 21 eine mit einer Freigabestellung korrespondierende Stellung einnehmen, wie dies in Fig. 4 gezeigt ist und bei der der Betätigungshebel 21 am weitesten weg von der Bodenreinigungsmaschine 3 nach vorne geschwenkt ist (siehe auch Fig. 1). Außerdem kann der Betätigungshebel 21 durch Verschwenken zusammen mit der Betätigungswelle 19 die in Fig. 5 gezeigte Stellung einnehmen, die einer Koppelstellung entspricht. Schließlich kann der Betätigungshebel 21 zusammen mit der Betätigungswelle 19 in die in Fig. 6 und 3 gezeigte Stellung verschwenkt werden, die einer Aushebestellung entspricht.

Die Führung 35 ist dabei derart ausgestaltet, dass der Betätigungshebel 21, wenn er aus der mit der Koppelstellung korrespondierenden Stellung (Fig 2 und 5) in die Freigabestellung (Fig. 1 und 4) verschwenkt wird, eine Bewegung parallel zur Schwenkachse bzw. Betätigungswelle 19 und anschließend eine Schwenkbewegung um die Schwenkachse vollzieht. Dadurch ist sichergestellt, dass der Betätigungshebel 21 nicht in einem Zug aus der Aushebestellung Fig. 3 und 6 in die Freigabestellung (Fig. 1 und 4) verschwenkt werden kann.

Das erste Kopplungselement 27 und die hier mit der Betätigungswelle 19 zusammenfallende Schwenkachse legen eine Querebene V fest, in der die Schwenkachse bzw. Betätigungswelle 19 verläuft. Außerdem verläuft die Querebene V quer zur Fahrtrichtung der Bodenreinigungsmaschine 3 und von der Bodenfläche 11 nach oben durch das erste Kopplungselement 27. In dem hier beschriebenen Ausführungsbeispiel verläuft die Querebene V in nahezu vertikaler Richtung durch das erste Kopplungselement 27.

Das Abstützelement 23 ist derart fest mit der Betätigungswelle 19 gekoppelt, dass beim Verschwenken der Betätigungswelle 19 mittels des Betätigungshebels 21 das Abstützelement zwischen einer ausgefahrenen Stellung, die in Fig. 1 gezeigt ist, und einer ersten eingefahrenen Stellung und einer zweiten eingefahrenen Stellung verschwenkt wird, die in den Fig. 2 und 3 wiedergegeben sind. In der ausgefahrenen Stellung hat das freie Ende des Abstützelements 23 und damit das Laufrad 25 einen größeren Abstand von dem Basisrahmen 17 als in den eingefahrenen Stellungen. Damit kann das Anbauteil 1 in der ausgefahrenen Stellung des Abstützelements 23 von diesem auf der Bodenfläche 11 abgestützt werden.

Das Druckelement 31 ist ebenfalls fest mit der Betätigungswelle 19 gekoppelt, und zwar derart, dass durch Verschwenken der Betätigungswelle 19 mittels des Betätigungshebels 21 das Druckelement 23 zwischen einer Freigabestellung (Fig. 1), einer Koppelstellung (Fig. 2) und einer Aushebestellung (Fig. 3) verschwenkt wird. Dabei ist die Anbindung an die Betätigungswelle 19 derart, dass die Position des freien Endes des Druckelements 31 in der Freigabestellung (Fig. 1), gesehen entlang einer Verstellrichtung, die senkrecht zur Querebene V verläuft, dem Vorderende des Anbauteils 1 näher ist als dies in der Aushebestellung (Fig. 3) der Fall ist. Wie ein Vergleich der Fig. 1 und 3 zeigt, wird also das Druckelement 31 beim Verschwenken der Betätigungswelle 19 mittels des Betätigungshebels 21 aus der Freigabestellung in die Aushebestellung in den Abbildungen nach rechts hin zu dem Kopplungsende und darüber hinaus bewegt, sodass es zur Anlage mit der Anlagefläche 33 am Maschinenrahmen der Bodenreinigungsmaschine 3 kommt. Außerdem gibt es noch eine Koppelstellung für das Druckelement 31, die in Fig. 2 gezeigt wird und bei der das freie Ende des Druckelements 31, gesehen entlang der Verstellrichtung, zwischen der Position des freien Endes in der Freigabestellung und der in der Aushebestellung liegt. Auch in der Koppelstellung liegt das Druckelement 31 bereits an der Anlagefläche 33 an der Bodenreinigungsmaschine 3 an.

Schließlich sind das Abstützelement 23 und das Druckelement 31 so an der Betätigungswelle 19 befestigt, dass dann, wenn das Druckelement 31 in die Freigabestellung verschwenkt ist, das Abstützelement 23 in die ausgefahrene Stellung geschwenkt ist und somit das Anbauteil 1 auf der Bodenfläche 11 abstützt. Wenn das Druckelement 31 jedoch mittels des Betätigungshebels 21 in die Aushebestellung oder die Koppelstellung geschwenkt ist, befindet sich das Abstützelement 23 in einer der beiden eingefahrenen Stellungen, und das Anbauteil 1 liegt mit dem Laufrad 25 nicht auf der Bodenfläche 11 auf.

Das zuvor beschriebene Anbauteil 1 kann nun in der folgenden Weise an einer Bodenreinigungsmaschine 3 angebracht sowie abgesenkt und ausgehoben werden.

Wenn das Druckelement 23 des Anbauteils 1 in der in den Fig. 1 und 3 dargestellten Freigabestellung ist, wird es von dem Abstützelement 23 so auf der Bodenfläche 11 abgestützt, dass die Bodenreinigungsmaschine 3 mit dem zweiten Kopplungselement 29 unter das erste Kopplungselement 27 bewegt werden kann, wie dies auch in Fig. 1 dargestellt ist. Nun kann der Betätigungshebel 21 aus der Stellung, die der Freigabestellung entspricht (Fig. 4) in die der Koppelstellung entsprechenden Position (Fig. 5) verschwenkt werden, wobei hierzu auch eine Bewegung des Betätigungshebels 21 parallel zur Betätigungswelle 19 erforderlich ist. Bei dieser Bewegung wird aufgrund der zuvor beschriebenen Kopplung von Abstützelement 23 und Druckelement 31 mit der Betätigungswelle 19 das Druckelement 31 gegen die Anlagefläche 33 an der Bodenreinigungsmaschine 3 gedrückt, sodass dadurch das Anbauteil aufgrund der über der Anlagefläche 33 liegenden Verbindung der Kopplungselemente 27, 29 gegen einen Schwenkbewegung des Vorderendes des Anbauteils 1 abgestützt wird. Gleichzeitig wird das Abstützelement 23 in die erste eingefahrene Stellung geschwenkt, sodass es mit dem Laufrad 25 nicht mehr auf der Bodenfläche 11 aufliegt. Das Anbauteil 1 wird also durch eine einzige Bewegung des Betätigungshebels 21 mit der Bodenreinigungsmaschine 3 gekoppelt. In dieser Kopplungsstellung sind die Borsten 9, 15 der Kehrwalze 5 und der Seitenbesen 13 in Eingriff mit der Bodenfläche 11.

Wenn der Betätigungshebel 21 nun weiter in die der Aushebestellung entsprechenden Position verschwenkt wird (Fig. 6), wird das Druckelement 31 weiter über die Querebene V weg von dem Vorderende des Anbauteils 1 bewegt, sodass das Vorderende des Anbauteils 1 aufgrund der Lage der Verbindung zwischen den Kopplungselementen 27, 29 weiter nach oben geschwenkt wird. Dadurch kommen die Borsten 9, 15 der Kehrwalze 5 und der Seitenbesen 13 außer Eingriff mit der Bodenfläche 11.

Analog kann das Anbauteil 1 durch Zurückschwenken des Betätigungshebels 21 in die der Kopplungsstellung entsprechende Position (Fig. 5) wieder zur Bodenfläche 11 hin abgesenkt werden.

Wenn schließlich das Anbauteil 1 von der Bodenreinigungsmaschine 3 gelöst werden soll, muss der Betätigungshebel 21 wieder in die der Freigabestellung entsprechende Position verschwenkt werden, wobei hier, um eine versehentliche Bewegung aus der Aushebestellung unmittelbar in die Freigabestellung zu verhindern, zunächst eine Bewegung parallel zur Betätigungswelle 19 erforderlich ist. Beim Verschwenken der Betätigungswelle 19 in die Freigabestellung wird das Abstützelement 23 auf die Bodenfläche 11 abgesenkt und das Anbauteil 1 angehoben, sodass das erste Kopplungselement 27 außer Eingriff mit dem zweiten Kopplungselement 29 kommt. Das Anbauteil 1 ist dann von der Bodenreinigungsmaschine 1 gelöst.

Bei dem Ausführungsbeispiel wird somit erreicht, dass allein durch Betätigen des Betätigungshebels 21 ein Ankoppeln und Lösen des Anbauteils 1 an der Bodenreinigungsmaschine 3 als auch ein Absenken und Ausheben des Anbauteils 1 bewirkt werden kann. Dabei ist der gesamte Aufbau vergleichsweise einfach gehalten.

### Bezugszeichen

- 1: Anbauteil
- 3: Bodenreinigungsmaschine
- 5: Kehrwalze
- 7: Zentralkörper
- 9: Borsten
- 11: Bodenfläche
- 13: Seitenbesen
- 15: Borsten
- 17: Basisrahmen
- 19: Betätigungswelle
- 21: Betätigungshebel
- 23: Abstützelement
- 25: Laufrad
- 27: erstes Kopplungselement
- 29: zweites Kopplungselement
- 31: Druckelement
- 33: Anlagefläche
- 35: Führung

## Patentansprüche

1. Anbauteil (1) zum Anbringen an eine Bodenreinigungsmaschine(3),
mit einem Basisrahmen (17), der ein Vorderende und ein Kopplungsende aufweist, wobei das Kopplungsende im an der Bodenreinigungsmaschine (3) angebrachten Zustand des Anbauteils (1) zu der Bodenreinigungsmaschine (3) weist und das Vorderende von der Bodenreinigungsmaschine (3) weg weist,
mit einem Abstützelement (23), das ausgebildet ist, das Anbauteil (1) in einem demontierten Zustand, in dem es von der Bodenreinigungsmaschine (3) gelöst ist, mit einem freien Ende auf einer Bodenfläche (11) abzustützen,
mit einem ersten Kopplungselement (27), das an dem Basisrahmen (17) angebracht und derart ausgestaltet ist, dass es bei einer vertikalen Bewegung des Anbauteils hin zu der Bodenfläche (11) relativ zu der Bodenreinigungsmaschine (3) mit einem zweiten Kopplungselement (29) an der Bodenreinigungsmaschine (3) so eingreifen kann, dass es gegen eine weitere vertikale Bewegung und eine Bewegung parallel zur Bodenfläche (11) relativ zu Bodenreinigungsmaschine (3) verriegelt ist,
mit einem Druckelement (31), das verschwenkbar an dem Basisrahmen (17) angebracht ist und das mit einem freien Ende mit einer, vorzugsweise vertikal verlaufenden, Anlagefläche (33) an der Bodenreinigungsmaschine (3) zur Anlage kommen kann,
mit einem Betätigungselement (21), das um eine horizontal verlaufende Achse relativ zu dem Basisrahmen (17) verschwenkt werden kann, und
mit einer Betätigungswelle (19), die um eine Schwenkachse schwenkbar an dem Basisrahmen (17) gehaltert ist und die mit dem Betätigungselement (21) gekoppelt ist,
wobei das erste Kopplungselement (27) und die Schwenkachse eine Querebene (V) festlegen, in der die Schwenkachse verläuft und die quer zur Fahrtrichtung der P Bodenreinigungsmaschine von der Bodenfläche (11) nach oben durch das erste Kopplungselement (27) verläuft,
wobei das Abstützelement (23) mit der Betätigungswelle (19) gekoppelt ist und beim Verschwenken der Betätigungswelle (19) zwischen einer ausgefahrenen und wenigstens einer eingefahrenen Stellung verschwenkt wird, wobei das freie Ende des Abstützelements (23) in der ausgefahrenen Stellung einen größeren Abstand von dem Basisrahmen (17) hat als in der wenigstens einen eingefahrenen , Stellung,
wobei das Druckelement (31) mit der Betätigungswelle gekoppelt ist und beim Verschwenken der Betätigungswelle zwischen einer Freigabestellung, einer Koppelstellung und einer Aushebestellung verschwenkt wird,
wobei die Position des freien Endes des Druckelements (31) in der Freigabestellung, gesehen entlang einer Verstellrichtung, die senkrecht zur Querebene (V) verläuft, dem Vorderende näher ist als die in der Aushebestellung und
wobei die Position des freien Endes in der Koppelstellung, gesehen entlang der Verstellrichtung, zwischen der in der Freigabestellung und der in der Aushebestellung liegt und
wobei das Druckelement (31) und das Abstützelement (23) derart mit der Betätigungswelle (19) gekoppelt sind, dass in der Freigabestellung das Abstützelement (23) in die ausgefahrene Stellung geschwenkt ist und dass in der Aushebestellung und der Koppelstellung das Abstützelement in einer der wenigstens einen eingefahrenen Stellungen ist.

2. Anbauteil nach Anspruch 1, wobei sich die Betätigungswelle (19) entlang der Schwenkachse erstreckt.

3. Anbauteil nach Anspruch 1 oder 2, wobei das Abstützelement (23) an der Betätigungswelle (19) befestigt ist und mit der Betätigungswelle (19) um die Schwenkachse schwenkt.

4. Anbauteil nach einem oder mehreren der Ansprüche 1 bis 3, wobei das Druckelement (31) an der Betätigungswelle (19) befestigt ist und mit der Betätigungswelle (19) um die Schwenkachse schwenkt.

5. Anbauteil nach einem oder mehreren der Ansprüche 1 bis 4, wobei das Betätigungselement (21) an der Betätigungswelle (19) befestigt ist und mit der Betätigungswelle (19) um die Schwenkachse schwenkt, sodass eine horizontal verlaufende Achse mit der Schwenkachse zusammenfällt.

6. Anbauteil nach einem oder mehreren der Ansprüche 1 bis 5, wobei an dem freien Ende des Abstützelements ein Laufrad (25) vorgesehen ist.

7. Anbauteil nach einem oder mehreren der Ansprüche 1 bis 6, wobei das Betätigungselement als Betätigungshebel (21) ausgebildet ist und
wobei eine Führung (35) für den Betätigungshebel (21) vorgesehen ist, die derart ausgestaltet ist, dass der Betätigungshebel (21), wenn er aus der mit der Koppelstellung korrespondierenden Stellung in die Freigabestellung verschwenkt wird, eine Bewegung parallel zur Schwenkachse und anschließend eine Schwenkbewegung um die Schwenkachse vollzieht.

8. Anbauteil nach einem oder mehreren der Ansprüche 1 bis 7, wobei an dem Basisrahmen (17) ein Bürstenelement (5, 13) um eine Drehachse drehend angetrieben gehaltert ist,
wobei das Bürstenelement (5, 13) einen Zentralkörper (7) und sich davon wegerstreckende Borsten (9, 15) aufweist,
wobei in der Koppelstellung die freien Enden der Borsten (9, 15) mit der Bodenfläche (11) eingreifen und
wobei in der Aushebestellung die freien Enden der Borsten (9, 15) von der Bodenfläche (11) beabstandet sind.

9. Anbauteil nach Anspruch 8, wobei die Drehachse parallel zu der Schwenkachse verläuft.

10. Anbauteil nach Anspruch 8, wobei die Drehachse senkrecht zu der Schwenkachse verläuft.

11. System aus einer Bodenreinigungsmaschine (3) und einem Anbauteil (1) nach einem der Ansprüche 1 bis 10,
wobei die Bodenreinigungsmaschine (3) einen Maschinenrahmen aufweist an dem ein Fahrwerk zum Bewegen der Bodenreinigungsmaschine (3) über eine zu reinigende Bodenfläche (11) vorgesehen ist,
wobei an dem Maschinenrahmen eine vertikal verlaufende Anlagefläche (33) und ein in der vertikalen Richtung gesehen oberhalb der Anlagefläche (33) angeordnetes zweites Kopplungselement (29) vorgesehen sind, wobei das zweite Kopplungselement (29) zum Eingriff mit dem ersten Kopplungselement (27) des Anbauteils (1) vorgesehen ist.

## Claims

1. Attachment device (1) for attaching to a floor-cleaning machine (3),
having a base frame (17), which has a front end and a coupling end, wherein, in the state in which the attachment device (1) is attached to the floor-cleaning machine (3), the coupling end is oriented in the direction of the floor-cleaning machine (3) and the front end is oriented away from the floor-cleaning machine (3), having a supporting element (23), which is designed so that, when the attachment device (1) is in a disassembled state, in which it has been released from the floor-cleaning machine (3), said supporting element supports the attachment device, by way of a free end, on a ground surface (11),
having a first coupling element (27), which is attached to the base frame (17) and is configured such that, when the attachment device moves vertically in the direction of the ground surface (11) relative to the floor-cleaning machine (3), said first coupling element can engage with a second coupling element (29) on the floor-cleaning machine (3) such that it is locked against any further vertical movement and movement parallel to the ground surface (11) relative to the floor-cleaning machine (3), having a pressure-exerting element (31), which is attached to the base frame (17) in a pivotable manner and can come into abutment, by way of a free end, with a preferably vertically running abutment surface (33) on the floor-cleaning machine (3),
having an actuating element (21), which can be pivoted about a horizontally running axis relative to the base frame (17), and
having an actuating shaft (19), which is retained on the base frame (17) such that it can be pivoted about a pivot axis and which is coupled to the actuating element (21), wherein the first coupling element (27) and the pivot axis define a transverse plane (V), in which the pivot axis runs and which runs upwards from the ground surface (11), through the first coupling element (27), in a direction transverse to the direction of travel of the floor-cleaning machine,
wherein the supporting element (23) is coupled to the actuating shaft (19) and, when the actuating shaft (19) pivots, is pivoted between an extended position and at least one retracted position, wherein the free end of the supporting element (23) in the extended position is at a greater distance from the base frame (17) than in the at least one retracted position,
wherein the pressure-exerting element (31) is coupled to the actuating shaft and, when the actuating shaft pivots, is pivoted between a release position, a coupling position and a disengagement position,
wherein the placement of the free end of the pressure-exerting element (31) in the release position is closer to the front end, as seen along an adjustment direction which runs perpendicularly to the transverse plane (V), than that in the disengagement position, and
wherein the placement of the free end in the coupling position is located, as seen along the adjustment direction, between that in the release position and that in the disengagement position, and
wherein the pressure-exerting element (31) and the supporting element (23) are coupled to the actuating shaft (19) such that, in the release position, the supporting element (23) has been pivoted into the extended position, and that, in the disengagement position and the coupling position, the supporting element is in one of the at least one retracted positions.

2. Attachment device according to Claim 1, wherein the actuating shaft (19) extends along the pivot axis.

3. Attachment device according to Claim 1 or 2, wherein the supporting element (23) is fastened on the actuating shaft (19) and pivots with the actuating shaft (19) about the pivot axis.

4. Attachment device according to one or more of Claims 1 to 3, wherein the pressure-exerting element (31) is fastened on the actuating shaft (19) and pivots with the actuating shaft (19) about the pivot axis.

5. Attachment device according to one or more of Claims 1 to 4, wherein the actuating element (21) is fastened on the actuating shaft (19) and pivots with the actuating shaft (19) about the pivot axis, in which case a horizontally running axis coincides with the pivot axis.

6. Attachment device according to one or more of Claims 1 to 5, wherein a wheel (25) is provided at the free end of the supporting element.

7. Attachment device according to one or more of Claims 1 to 6, wherein the actuating element is designed in the form of an actuating lever (21), and
wherein a guide (35) is provided for the actuating lever (21), said guide being configured such that, when the actuating lever (21) is pivoted out of the position corresponding with the coupling position into the release position, said actuating lever performs a movement parallel to the pivot axis and then a pivoting movement about the pivot axis.

8. Attachment device according to one or more of Claims 1 to 7, wherein a brush element (5, 13) is retained on the base frame (17) so as to be driven in rotation about an axis of rotation,
wherein the brush element (5, 13) has a central body (7) and bristles (9, 15) extending away from said central body,
wherein, in the coupling position, the free ends of the bristles (9, 15) engage with the ground surface (11), and wherein, in the disengagement position, the free ends of the bristles (9, 15) are spaced apart from the ground surface (11).

9. Attachment device according to Claim 8, wherein the axis of rotation runs parallel to the pivot axis.

10. Attachment device according to Claim 8, wherein the axis of rotation runs perpendicularly to the pivot axis.

11. System made up of a floor-cleaning machine (3) and of an attachment device (1) according to one of Claims 1 to 10,
wherein the floor-cleaning machine (3) has a machine frame on which a chassis is provided for the purpose of moving the floor-cleaning machine (3) over a ground surface (11) which is to be cleaned,
wherein the machine frame has provided on it a vertically running abutment surface (33) and a second coupling element (29), which is arranged above the abutment surface (33), as seen in the vertical direction, wherein the second coupling element (29) is provided for the purpose of engaging with the first coupling element (27) of the attachment device (1).

## Revendications

1. Pièce rapportée (1) destinée à être montée sur une machine de nettoyage du sol (3),
comportant un cadre de base (17) qui comprend une extrémité avant et une extrémité d'accouplement, dans laquelle l'extrémité d'accouplement est, dans l'état de la pièce rapportée (1) monté sur la machine de nettoyage du sol (3), tournée vers la machine de nettoyage du sol (3) et l'extrémité avant est détournée de la machine de nettoyage du sol (3),
comportant un élément de support (23) qui est conçu pour supporter la pièce rapportée (1) sur une surface du sol (11) par une extrémité libre dans un état démonté dans lequel il est détaché de la machine de nettoyage du sol (3),
comportant un premier élément d'accouplement (27) qui est monté sur le cadre de base (17) et configuré de telle sorte que, lors d'un déplacement vertical de la pièce rapportée vers la surface du sol (11) par rapport à la machine de nettoyage du sol (3), il peut venir en prise avec un deuxième élément d'accouplement (29) sur la machine de nettoyage du sol (3), de telle sorte qu'il soit bloqué par rapport à la machine de nettoyage du sol (3) de manière à empêcher un autre déplacement vertical et un déplacement parallèlement à la surface du sol (11), comportant un élément de pression (31) qui est monté pivotant sur le cadre de base (17) et qui peut, par une extrémité libre, venir en appui contre une surface d'appui (33), s'étendant de préférence verticalement, sur la machine de nettoyage du sol (3),
comportant un élément d'actionnement (21) qui peut être pivoté, autour d'un axe s'étendant horizontalement, par rapport au cadre de base (17) et
comportant un arbre d'actionnement (19) qui est supporté sur le cadre de base (17) de manière pivotante autour d'un axe de pivotement et qui est accouplé à l'élément d'actionnement (21),
dans laquelle le premier élément d'accouplement (27) et l'axe de pivotement définissent un plan transversal (V) dans lequel l'axe de pivotement s'étend et qui s'étend transversalement à la direction de conduite de la machine de nettoyage du sol à partir de la surface du sol (11) vers le haut à travers le premier élément d'accouplement (27),
dans laquelle l'élément de support (23) est accouplé à l'arbre d'actionnement (19) et est, lors du pivotement de l'arbre d'actionnement (19), pivoté entre une position déployée et au moins une position rentrée, dans laquelle l'extrémité libre de l'élément de support (23) présente, dans la position déployée, une plus grande distance au cadre de base (17) que dans l'au moins une position rentrée,
dans laquelle l'élément de pression (31) est accouplé à l'arbre d'actionnement et est, lors du pivotement de l'arbre d'actionnement, pivoté entre une position de libération, une position d'accouplement et une position levée,
dans laquelle la position de l'extrémité libre de l'élément de pression (31) est, vue le long d'une direction de déplacement qui s'étend perpendiculairement au plan transversal (V), plus près de l'extrémité avant dans la position de libération que dans la position levée et
dans laquelle la position de l'extrémité libre dans la position d'accouplement est, vue le long de la direction de déplacement, située entre celle dans la position de libération et celle dans la position levée et
dans laquelle l'élément de pression (31) et l'élément de support (23) sont accouplés à l'arbre d'actionnement (19) de telle sorte que, dans la position de libération, l'élément de support (23) est pivoté dans la position déployée et que, dans la position levée et la position d'accouplement, l'élément de support est dans l'une parmi la ou les positions rentrées.

2. Pièce rapportée selon la revendication 1, dans laquelle l'arbre d'actionnement (19) s'étend le long de l'axe de pivotement.

3. Pièce rapportée selon la revendication 1 ou 2, dans laquelle l'élément de support (23) est fixé à l'arbre d'actionnement (19) et pivote avec l'arbre d'actionnement (19) autour de l'axe de pivotement.

4. Pièce rapportée selon l'une ou plusieurs des revendications 1 à 3, dans laquelle l'élément de pression (31) est fixé à l'arbre d'actionnement (19) et pivote avec l'arbre d'actionnement (19) autour de l'axe de pivotement.

5. Pièce rapportée selon l'une ou plusieurs des revendications 1 à 4, dans laquelle l'élément d'actionnement (21) est fixé à l'arbre d'actionnement (19) et pivote avec l'arbre d'actionnement (19) autour de l'axe de pivotement, de sorte qu'un axe s'étendant horizontalement coïncide avec l'axe de pivotement.

6. Pièce rapportée selon l'une ou plusieurs des revendications 1 à 5, dans laquelle une roue mobile (25) est prévue à l'extrémité libre de l'élément de support.

7. Pièce rapportée selon l'une ou plusieurs des revendications 1 à 6, dans laquelle l'élément d'actionnement est réalisé sous forme de levier d'actionnement (21) et
dans laquelle un guide (35) pour le levier d'actionnement (21) est prévu, lequel guide est configuré de telle sorte que le levier d'actionnement (21) effectue, lorsqu'il est pivoté de la position correspondant à la position d'accouplement dans la position de libération, un déplacement parallèlement à l'axe de pivotement et ensuite un déplacement de pivotement autour de l'axe de pivotement.

8. Pièce rapportée selon l'une ou plusieurs des revendications 1 à 7, dans laquelle un élément de brossage (5, 13) est supporté sur le cadre de base (17) de manière entraînée en rotation autour d'un axe de rotation,
dans laquelle l'élément de brossage (5, 13) comprend un corps central (7) et des poils (9, 15) s'étendant à partir de celui-ci,
dans laquelle les extrémités libres des poils (9, 15) viennent en contact avec la surface du sol (11) dans la position d'accouplement et
dans laquelle les extrémités libres des poils (9, 15) sont espacées de la surface du sol (11) dans la position levée.

9. Pièce rapportée selon la revendication 8, dans laquelle l'axe de rotation s'étend parallèlement à l'axe de pivotement.

10. Pièce rapportée selon la revendication 8, dans laquelle l'axe de rotation s'étend perpendiculairement à l'axe de pivotement.

11. Système constitué d'une machine de nettoyage du sol (3) et d'une pièce rapportée (1) selon l'une des revendications 1 à 10,
dans lequel la machine de nettoyage du sol (3) comprend un cadre de machine sur lequel est prévu un train roulant pour le déplacement de la machine de nettoyage du sol (3) sur une surface du sol (11) à nettoyer,
dans lequel une surface d'appui (33) s'étendant verticalement et un deuxième élément d'accouplement (29) disposé au-dessus de la surface d'appui (33) vu dans la direction verticale sont prévus sur le cadre de machine, dans lequel le deuxième élément d'accouplement (29) est destiné à venir en prise avec le premier élément d'accouplement (27) de la pièce rapportée (1).
